# EUROPÄISCHE PATENTSCHRIFT

(11) **EP 4 034 856 B1**
(45) Veröffentlichungstag und Bekanntmachung des Hinweises auf die Patenterteilung: **26.07.2023**
(21) Anmeldenummer: 20746955.2
(22) Anmeldetag: 27.07.2020
(51) Int. Cl.: G01L 25/00, G01M 5/00, G01M 7/04, G01M 7/08, G01L 27/00

(54) **QUALITÄTSKONTROLLE FÜR VORGESPANNTE BAUELEMENTE**
QUALITY CONTROL FOR PRE-TENSIONED COMPONENT
CONTRÔLE DE LA QUALITÉ D'UN COMPOSANT PRÉ-TENSIONNÉ

(30) Priorität: 26.09.2019 DE 102019214743
(43) Veröffentlichungstag der Anmeldung: 03.08.2022
(73) Patentinhaber: Robert Bosch GmbH, 70442 Stuttgart (DE)
(72) Erfinder: BOUVIER, Valerie, 71254 Ditzingen (DE); NGUYEN-TUONG, The Duy, 75365 Calw (DE); PICHT, Gunnar, 71254 Ditzingen (DE); CROMME, Peter, 96050 Bamberg (DE); STORCK, Heiner, 70825 Korntal-Muenchingen (DE); KONSTANDIN, Alexander, 74862 Binau (DE); HILDEBRAND, Felix Eberhard, 70176 Stuttgart-West (DE)
(86) Internationale Anmeldenummer: PCT/EP2020/071134
(87) Internationale Veröffentlichungsnummer: WO 2021/058179

(56) Entgegenhaltungen:
- EP-A2- 3 168 587

## Beschreibung

Die vorliegende Erfindung betrifft die Qualitätskontrolle von Bauelementen, wie beispielsweise Sensoren zur Messung einwirkender Kräfte sowie Aktoren zur Ausübung von Kräften auf eine elektrische Ansteuerung hin.

### Stand der Technik

Ein Sensor ist ein Bauelement, das mittels eines Wandlers die Einwirkung der interessierenden physikalischen Messgröße in ein auf elektrischem Wege erfassbares Signal umwandelt. Ein Aktor ist ein Bauelement, das mittels eines Wandlers eine elektrische Ansteuerung in die Ausübung einer Wirkung auf eine zu beeinflussende physikalische Größe umwandelt. In Sensoren und Aktoren, die Kräfte oder auch Drücke messen bzw. ausüben, kommen beispielsweise piezoelektrische oder ferroelektrische Wandler zum Einsatz, die aus elektrisch polarisierten Materialien bestehen.

Bei derartigen Sensoren und Aktoren ist es vielfach erforderlich, den Wandler durch ein Vorspannelement ständig mit einer definierten Druckbelastung zu beaufschlagen, um den Arbeitspunkt einzustellen. Wird der Wandler im Betrieb zu stark druckbelastet, depolarisiert das Material des Wandlers, und seine Wirkung wird deutlich abgeschwächt. Eine zu geringe Druckbelastung hingegen kann dazu führen, dass der Kraftschluss zwischen dem Wandler und der Außenwelt komplett abreißt und der Sensor bzw. Aktor somit ausfällt. Das dem Stand der Technik am nächsten kommende Dokument EP 3 168 587 A2 (BOSCH GMBH ROBERT [DE]) betrifft eine Prüfvorrichtung für die Dauerprüfung eines Kraftsensors oder einer Stapelung von Kraftsensoren, welche insbesondere mit Kraft- bzw. Drucksensoren zur Nadelschließzeitpunkterkennung in Kraftstoffinjektoren verwendbar ist. Es befasst sich eher mit der Dauerprüfung eines Bauelements als mit der Prüfung seiner Qualität.

Daher ist es wünschenswert, die durch das Vorspannelement auf den Wandler ausgeübte Druckbelastung auf den Wandler im Rahmen einer Qualitätskontrolle bei der Fertigung zu überprüfen.

### Offenbarung der Erfindung

Im Rahmen der Erfindung wurde ein Verfahren für die Qualitätskontrolle eines Bauelements entwickelt. Das Bauelement kann insbesondere als Sensor, und/oder als Aktor, ausgebildet sein. Wenn es beispielsweise zu einem für die Sensorik nutzbaren physikalischen Effekt einen reziproken Effekt gibt, kann das Bauelement sowohl als Sensor als auch, mittels des reziproken Effekts, als Aktor funktionieren.

Das Bauelement umfasst mindestens ein Wandlerelement, welches zwischen einer auf das Wandlerelement oder von dem Wandlerelement ausgeübten Kraft einerseits und einer Änderung mindestens einer elektrischen Größe des Wandlerelements andererseits wandelt. So erzeugt beispielsweise ein piezoelektrisches oder ferroelektrisches Wandlerelement eine messbare elektrische Spannung, wenn es infolge einer Druckbelastung verformt wird. Umgekehrt kann ein solches Wandlerelement durch das Anlegen einer elektrischen Spannung zu einer Verformung veranlasst werden und auf diese Weise eine Kraft ausüben. Das Wandlerelement ist durch ein Vorspannelement, wie beispielsweise eine Vorspannfeder, druckbelastet.

Im Rahmen des Verfahrens wird eine Frequenzabhängigkeit einer durch Anlegen einer Spannung mit einer Wechselspannungskomponente an das Bauelement beeinflussten elektrischen Kenngröße des Bauelements beschafft. Die elektrische Kenngröße kann beispielsweise einen Strom, den die Spannung durch das Bauelement treibt, umfassen. Alternativ oder auch in Kombination hierzu kann die elektrische Kenngröße beispielsweise eine Impedanz umfassen, die aus der Spannung und einem von dieser Spannung durch das Bauelement getriebenen Strom gebildet wird. Die Spannung kann zusätzlich noch einen Gleichspannungsanteil, wie beispielsweise einen Gleichspannungs-Offset, aufweisen.

Unter dem Beschaffen ist insbesondere beispielsweise zu verstehen, dass die Frequenzabhängigkeit gemessen wird. Der Begriff schließt jedoch ausdrücklich auch ein, dass eine erste Entität die Frequenzabhängigkeit misst und eine zweite Entität die Frequenzabhängigkeit auswertet. Weiterhin kann die Auswertung auch auf zu einem früheren Zeitpunkt aufgenommenen, archivierten Daten erfolgen. Die Frequenzabhängigkeit kann insbesondere beispielswiese als Funktion vorliegen, die einem Frequenzwert einen Stromwert und/oder einen Impedanzwert zuordnet. Es kann aber auch ein beliebiger Extrakt aus einer solchen Funktion verwendet werden.

Diese frequenzabhängige Impedanz kann einer Vorverarbeitung zur Extraktion strukturdynamischer, signalanalytischer, materialwissenschaftlicher oder sonstiger Eigenschaften oder Features zugeführt werden, die eine größere Effizienz oder Effektivität der nachfolgenden Schritte ermöglichen.

Aus der Frequenzabhängigkeit wird mindestens eine Bewertungsgröße ausgewertet. Diese Bewertungsgröße kann insbesondere beispielsweise eine Klassifikation, d.h. eine Zuordnung zu einer oder mehreren Klassen aus einem vorgegebenen Katalog von Klassen, umfassen. Alternativ oder auch in Kombination kann die Bewertungsgröße beispielsweise auch eine Regression, d.h. eine Zuordnung zu einem oder mehreren Regressionswerten einer kontinuierlichen Größe, umfassen. Aus der Bewertungsgröße wird mindestens eine gesuchte Qualitätsgröße, die ein Maß für die Qualität des Bauelements ist, ausgewertet.

Beispielsweise kann die Frequenzabhängigkeit einem parametrisierten physikalischen Modell zugeführt und von diesem physikalischen Modell auf die Bewertungsgröße abgebildet werden. Beispielsweise kann die Grundstruktur eines solchen physikalischen Modells aus bekannten qualitativen Zusammenhängen zwischen der Bewertungsgröße und der Frequenzabhängigkeit abgeleitet werden. Die Parameter können dann beispielsweise durch Parameteroptimierung und/oder Fits anhand von Situationen, für die sowohl die Frequenzabhängigkeit als auch die Bewertungsgröße bekannt sind, ermittelt werden.

Alternativ oder auch in Kombination hierzu kann die Frequenzabhängigkeit insbesondere beispielsweise eine trainierten Machine Learning-Modul zugeführt und von diesem Machine Learning-Modul auf die Bewertungsgröße abgebildet werden. Unter einem Machine Learning-Modul wird insbesondere ein Modul angesehen, das eine mit anpassbaren Parametern parametrierte Funktion mit großer Kraft zur Verallgemeinerung verkörpert. Die Parameter können beim Training eines Machine Learning-Moduls insbesondere dergestalt angepasst werden, dass bei Eingabe von Lern-Eingangsgrößenwerten in das Modul die zugehörigen Lern-Ausgangsgrößenwerte nach einem vorgegebenen Optimalitätskriterium optimal reproduziert werden. Das Machine Learning-Modul kann insbesondere ein künstliches neuronales Netzwerk, KNN, eine Support Vector Machine, ein Random-Forest-Modul, und/oder ein Gradient-Boosting-Modul, beinhalten und/oder sein.

Bei der Verwendung von Machine Learning sind somit immer zwei Phasen zu unterscheiden, nämlich das Training und die Inferenz.

Beim Training wird dem Machine Learning-Modul typischerweise eine große Anzahl von Lern-Eingangsgrößenwerten zugeführt, die im Sinne der beabsichtigten Anwendung eine Vielzahl bekannter Situationen mit hinreichender Variabilität repräsentieren. Die Parameter des Machine Learning-Moduls werden so lange variiert, bis das Machine Learning-Modul gelernt hat, die Lern-Eingangsgrößenwerte zutreffend auf die Lern-Ausgangsgrößenwerte abzubilden. Dieser Prozess ist in etwa vergleichbar mit dem Erlernen des Autofahrens durch einen Fahrschüler, der mit einer Vielzahl an Verkehrssituationen konfrontiert wird und von seinem Fahrlehrer jeweils eine Rückmeldung bekommt, inwieweit sein Verhalten auf die jeweilige Verkehrssituation gepasst hat oder nicht. Zu Beginn des Trainings wird der Fahrlehrer noch vergleichsweise häufig Kommentare geben oder in die Steuerung des Fahrzeugs eingreifen. Mit fortschreitendem Training werden diese Eingriffe zunehmend seltener und weniger intensiv.

Der Erfolg des Trainings wird in der Regel anhand von Validierungs-Eingangsgrößenwerten, für die die hierzu im Sinne der Anwendung passenden Validierungs-Ausgangsgrößenwerte bekannt sind, überprüft. Die Validierungs-Eingangsgrößenwerte wurden beim Training nicht verwendet. Wenn das Machine Learning-Modul die Validierungs-Eingangsgrößenwerte zutreffend auf die Validierungs-Ausgangsgrößenwerte abbildet, kann daher davon ausgegangen werden, dass das Machine Learning-Modul nicht lediglich die Trainingssituationen "auswendig gelernt" hat, sondern verallgemeinertes, auch auf künftige Situationen anwendbares Wissen gelernt hat. Die Validierung ist vergleichbar mit der Fahrprüfung, in der sich der Fahrschüler in einer für ihn noch neuen Situation bewähren muss.

Die Inferenz ist die bestimmungsgemäße Verwendung des fertig trainierten Machine Learning-Modells in der dafür vorgesehenen Anwendung, hier zur Ermittlung der Bewertungsgröße aus der Frequenzabhängigkeit. Im Bild der Fahrausbildung entspricht die Inferenz der normalen Teilnahme am Straßenverkehr nach erfolgreichem Erwerb der Fahrerlaubnis.

Für das Training sind große Mengen an Trainingsdaten (d.h., Lern-Eingangsgrößenwerte und zugehörige Lern-Ausgangsgrößenwerte) und ein großer Rechenaufwand erforderlich. Der Endanwender ist häufig lediglich an der Inferenz interessiert und verfügt weder über die Trainingsdaten noch über die für das Training nötige Rechenkapazität. Daher gibt es häufig eine Arbeitsteilung dahingehend, dass eine erste Entität (etwa ein Hersteller eines Geräts, das ein Machine Learning-Modul beinhaltet) das Training durchführt und eine zweite Entität (etwa der Käufer des Geräts, in dem die Parameter des Machine Learning-Moduls nach dem Training festgeschrieben sind) die Inferenz durchführt. So möchte beispielsweise ein Käufer eines zumindest teilweise automatisiert fahrenden Fahrzeugs, das in ähnlicher Weise trainiert wird wie ein menschlicher Fahrer, dieses Fahrzeug sofort nutzen und nicht erst trainieren.

Die Bewertungsgröße kann beispielsweise ein Maß für eine Druckkraft oder eine daraus abgeleitete Größe, wie z.B. die mechanische Spannung, sein, die zum Zeitpunkt der Messung der Frequenzabhängigkeit auf das Wandlerelement wirkt und/oder von dem Wandlerelement ausgeübt wird. Die Bewertungsgröße kann insbesondere ein Maß dafür sein, inwieweit die Druckkraft einer Vorgabe entspricht. Jedoch ist ein konkreter Bezug der Bewertungsgröße zu der Druckkraft nicht zwingend, auch wenn im Hintergrund die Druckkraft als wichtiger Faktor über die Qualität des Bauelements (mitbestimmt. Beispielsweise kann eine binäre Klassifikation dahingehend erfolgen, ob das Bauelement in Ordnung ist oder nicht. Eine detailliertere Klassifikation kann beispielsweise eine Einteilung in verschiedene Qualitätsstufen und/oder ggfs. vorliegende Fehlerarten umfassen. Eine Regression kann beispielsweise den konkreten Wert der Druckkraft umfassen.

Ein wesentlicher Vorteil der Qualitätskontrolle über die Frequenzabhängigkeit der elektrischen Kenngröße ist, dass diese unabhängig vom konkreten Fertigungsprozess des Bauelements im fertigen Zustand des Bauelements durchgeführt werden kann. Für die Messung können die gleichen elektrischen Anschlüsse verwendet werden, die auch im späteren Betrieb des Bauelements genutzt werden. Diese Anschlüsse müssen auch im fertigen Zustand des Bauelements noch von außen zugänglich sein. Andere Verfahren für die Qualitätskontrolle, die direkten Zugriff auf das Innere des Bauelements benötigen, können hingegen nur angewendet werden, solange dieser Zugriff nicht im Rahmen des Fertigungsprozesses (etwa durch Vergießen) abgeschnitten worden ist. Eine Messung im fertigen Zustand des Bauelements hat die maximale Aussagekraft, da sich die Druckkraft infolge von Fertigungsschritten, die mechanisch und/oder thermisch auf das Bauelement einwirken, noch ändern kann.

Die Nutzung eines trainierten Machine Learning-Moduls hat in diesem Zusammenhang den besonderen Vorteil, dass hierdurch die Druckkraft auch dann zuverlässig ermittelt werden kann, wenn sie im Verlauf des Fertigungsprozesses nicht monoton ansteigt. Insbesondere piezoelektrische und ferroelektrische Wandlerelemente weisen in dieser Hinsicht eine Hysterese auf. Wird beispielsweise bei einer bestimmten Druckkraft die Frequenzabhängigkeit des Stroms, bzw. der Impedanz, gemessen und die Druckkraft anschließend weiter erhöht, um schließlich wieder auf den ursprünglichen Wert vermindert zu werden, dann wird bei einer erneuten Messung die Frequenzabhängigkeit qualitativ anders sein. Wenn die beim Training des Machine Learning-Moduls verwendeten Trainingsdaten auch Situationen umfassen, in denen die Druckkraft auf das Wandlerelement erst bis zu einem Maximum angestiegen ist und dann wieder abgesenkt wurde, kann das Machine Learning-Modul die beschriebene Hysterese korrekt berücksichtigen.

Generell macht sich das Verfahren insbesondere bei der Anwendung in der Serienfertigung die beschriebene große Kraft zur Verallgemeinerung, die Machine Learning-Modulen innewohnt, zu Nutze. So bestehen beispielsweise piezoelektrische oder ferroelektrische Wandlerelemente in der Regel aus polykristallinen Materialien, die typischerweise zur Verstärkung des Signals, bzw. der Kraftausübung, auch noch in mehreren Schichten übereinander angeordnet sind. Der makroskopische Mittelwert der Polarisation ist für die elektrischen Eigenschaften des Wandlerelements relevant. Dieser Mittelwert schwankt innerhalb einer Menge von Wandlerelementen im Auslieferungszustand im Rahmen der spezifizierten Toleranzen, was wiederum das Impedanzspektrum beeinflusst. Weiterhin können bei der Fertigung zusätzlich zur beabsichtigten Vorspannung durch ein Vorspannelement durch mechanische Toleranzen weitere Vorspannungen entstehen.

Die genannten Schwankungen und Toleranzen bewirken, dass voraussichtlich mit keinem im realen Fertigungsprozess vorgelegten Bauelement eine im Rahmen des Trainings des Machine Learning-Moduls genutzte bekannte Frequenzabhängigkeit jemals exakt reproduziert werden wird. Die Frequenzabhängigkeit wird jedoch immer qualitativ durch eine grundsätzliche Abhängigkeit von der Druckkraft geprägt sein. Genau diese grundsätzliche Abhängigkeit kann von dem Machine Learning-Modul gelernt werden.

Insofern ist die Situation vergleichbar mit der Klassifikation von Objekten in Bildern. Selbst wenn zwei Bilder sich auf die gleiche Szenerie beziehen und unter nominell identischen Bedingungen aufgenommen wurden, werden diese Bilder nicht völlig identisch sein. Erst recht werden sich die Bilder deutlich voneinander unterscheiden, wenn sie beispielsweise unter unterschiedlichen Lichtverhältnissen aufgenommen wurden. Werden einem Machine Learning-Modul im Rahmen seines Trainings Bilder mit hinreichender Variabilität sowohl hinsichtlich der äußeren Bedingungen als auch hinsichtlich des tatsächlichen Gehalts an Objekten zugeführt, lernt das Modul, die Objekte auch in solchen Situationen zu erkennen, die im Training nicht abgehandelt wurden.

In einer besonders vorteilhaften Ausgestaltung wird aus der Frequenzabhängigkeit der elektrischen Kenngröße ein Maß für das Resonanzverhalten der elektrischen Kenngröße als Funktion der Frequenz ω der Wechselspannungskomponente, und/oder als Funktion von Materialeigenschaften und Kontakteigenschaften des Wandlerelements, die ihrerseits jeweils eine Funktion der Vorspannung sind, extrahiert und für die Auswertung der Bewertungsgröße herangezogen. Unter dem Resonanzverhalten wird insbesondere ein Verhalten der elektrischen Kenngröße in einem Frequenzbereich um eine Resonanzfrequenz ω₀ verstanden, in dem die Frequenzabhängigkeit dieser elektrischen Kenngröße besonders ausgeprägt ist. Das Resonanzverhalten hängt besonders stark von den mechanischen Eigenschaften des Wandlerelements sowie den Einbaubedingungen ab, die wiederum maßgeblich durch die Druckbelastung beeinflusst werden. Das Resonanzverhalten kann beispielsweise Frequenzen und/oder Gütefaktoren eines oder mehrerer Resonanzpeaks, und/oder sonstige das Resonanzverhalten charakterisierende Parameter, umfassen. Um das Resonanzverhalten für die Auswertung der Bewertungsgröße heranzuziehen, kann dieses insbesondere beispielsweise einem parametrisierten physikalischen Modell bzw. einem trainierten Machine Learning-Modell, mit dem die Bewertungsgröße ermittelt wird, zugeführt werden.

Beispielsweise kann aus einem Frequenzspektrum der elektrischen Kenngröße über eine große Bandbreite von Frequenzen ω ein Anteil extrahiert werden, der zu dem besagten Frequenzbereich um mindestens eine Resonanzfrequenz ω₀ gehört. Die wesentliche Information, die in dem Frequenzspektrum steckt, kann dann für die Auswertung der Bewertungsgröße beispielsweise auf die besagten Parameter, die das Resonanzverhalten charakterisieren, verdichtet werden. Die Information über das Resonanzverhalten der elektrischen Kenngröße ist somit eine Teilmenge der vollständigen Information über die Frequenzabhängigkeit der elektrischen Kenngröße. Wo immer also die Frequenzabhängigkeit der elektrischen Kenngröße weiter ausgewertet wird, kann an Stelle der vollständigen Frequenzabhängigkeit beispielsweise nur die Information über das Resonanzverhalten genutzt werden, welches eine Merkmalsextraktion darstellt.

Die Parameter, die das Resonanzverhalten charakterisieren, wie beispielsweise die Frequenzen und Gütefaktoren der Resonanzpeaks, hängen von Material- und Kontakteigenschaften des Wandlerelements ab. Die Material- und Kontakteigenschaften wiederum hängen von der Vorspannung ab. Daher kann jedwede Zusatzinformation über die Material- und Kontakteigenschaften, und/oder über die Vorspannung, die aus anderen Quellen zur Verfügung steht, ergänzend für die Auswertung der Bewertungsgröße aus dem Resonanzverhalten herangezogen werden.

In einer weiteren besonders vorteilhaften Ausgestaltung wird eine Frequenzabhängigkeit genutzt, die in einem Zustand des Bauelements gemessen wurde, in dem das Wandlerelement im Rahmen der Fertigung des Bauelements durch Vergießen umschlossen war. Wie zuvor beschrieben, ist dies der Zustand, in dem sich an der Druckbelastung des Wandlerelements nichts mehr ändern wird. Zugleich wird gerade beim Prozess des Vergießens sowohl mechanisch als auch thermisch intensiv auf das Bauelement eingewirkt. So wird das Bauelement beispielsweise beim Spritzgießen mit dem Druck beaufschlagt, mit dem das verwendete flüssige Material zugeführt wird. Der Prozess des Vergießens hat also ein Potential, die Druckkraft auf das Wandlerelement zu verändern. Insbesondere kann die Druckkraft während des Vergießens ein Maximum annehmen und beim Abkühlen nach dem Vergießen wieder abnehmen.

Alternativ wird in einer weiteren besonders vorteilhaften Ausgestaltung eine Frequenzabhängigkeit genutzt, die in einem Zustand des Bauelements gemessen wurde, in dem das Wandlerelement im Rahmen der Fertigung des Bauelements noch nicht durch Vergießen umschlossen war. Die Qualitätsgröße des Bauelements nach diesem Vergießen wird mit einem Modell, das den Prozess des Vergießens beschreibt, aus der Bewertungsgröße ausgewertet. Auf diese Weise kann das in dem Modell verkörperte Vorwissen weiterhin in vollem Umfang genutzt werden. Beim Training des Machine Learning-Moduls müssen daher nur solche Zusammenhänge gelernt werden, zu denen ein derartiges Vorwissen noch nicht verfügbar ist. Das Modell, das den Prozess des Vergießens beschreibt, kann beispielsweise ein Finite-Elemente-Modell sein, das ausgehend von einer Druckkraft auf das Wandlerelement vor dem Vergießen den Einfluss der mechanischen und thermischen Wirkungen des Vergießens auf die Druckkraft nach dem Vergießen, und somit auch auf die Polarisation des Wandlerelements nach dem Vergießen, beschreibt.

In einer weiteren besonders vorteilhaften Ausgestaltung wird in Antwort darauf, dass die ausgewertete Qualitätsgröße ein vorgegebenes Kriterium erfüllt, das Bauelement mit einer Qualitätseinstufung gekennzeichnet. Alternativ oder auch in Kombination kann das Bauelement durch Ansteuerung mindestens einer auf das Bauelement wirkenden Fördereinrichtung aus einer Fertigungslinie abgesondert werden. Auf diese Weise kann insbesondere in automatisierter Weise sichergestellt werden, dass jedem Kunden nur Bauelemente ausgeliefert werden, die dem jeweils versprochenen Qualitätsniveau entsprechen.

Die Qualitätskontrolle mit dem beschriebenen Verfahren ist zerstörungsfrei auch am fertigen Bauelement, beispielsweise am Sensor oder Aktor, durchführbar und zugleich auch so schnell, dass in Anbetracht der Taktzeit der Fertigung eine 100-%-Kontrolle möglich ist. Langsamere oder zerstörende Verfahren wären auf eine stichprobenartige Kontrolle beschränkt.

Die Erfindung stellt auch ein Verfahren zum Trainieren eines Machine Learning-Moduls für den Einsatz in dem zuvor beschriebenen Verfahren bereit. Für dieses Trainingsverfahren bleibt sämtliche für das zuvor beschriebene Verfahren gegebene Offenbarung mutatis mutandis gültig.

Im Rahmen des Trainingsverfahrens wird eine Frequenzabhängigkeit einer durch Anlegen einer Spannung mit einer Wechselspannungskomponente an das Bauelement beeinflussten elektrischen Kenngröße des Bauelements beschafft. Zusätzlich wird mindestens eine auf die Qualität des Bauelemente wirkende Kenngröße beschafft. Die Frequenzabhängigkeit und die Kenngröße werden zu einem Lern-Datensatz zusammengefasst.

Der Begriff "Beschaffen" ist in diesem Zusammenhang auch nicht auf eine tatsächliche Messung limitiert. Vielmehr können Lern-Datensätze auch simulatorisch erzeugt werden. So lassen sich beispielsweise bei piezoelektrischen oder ferroelektrischen Wandlerelementen für eine beliebige zufällig gewählte Anordnung der Körner in der polykristallinen Struktur sowohl die Frequenzabhängigkeit eines von der Spannung durch das Bauelement getriebenen Stroms, bzw. einer aus diesem Strom und der Spannung gebildeten Impedanz, als auch die Kenngröße, die auf die Qualität wirkt, simulatorisch ermitteln. Dank der Kraft des Machine Learning-Modells zur Verallgemeinerung sind auch solche Lern-Datensätze gewinnbringend nutzbar, obwohl die Verteilung der Körner in jedem realen Wandlerelement mehr oder weniger stark von der in der Simulation verwendeten Verteilung abweichen wird.

Parameter, die das Verhalten des Machine Learning-Moduls charakterisieren, werden dahingehend optimiert, dass das Machine Learning-Modul die in den Lern-Datensätzen enthaltenen Frequenzabhängigkeiten jeweils auf Bewertungsgrößen abbildet, die die gleiche Dimension haben wie die in den Lern-Datensätzen enthaltenen Kenngrößen und deren Werte nach Maßgabe einer Kostenfunktion optimal mit den Werten der in den Lern-Datensätzen enthaltenen Kenngrößen übereinstimmen. Wenn die Lern-Datensätze also beispielsweise Werte von Druckkräften enthalten, die in den durch die Frequenzabhängigkeiten charakterisierten Situationen tatsächlich auf das Bauelement gewirkt haben, dann wird das Machine Learning-Modul darauf trainiert, bei Eingabe der gleichen Frequenzabhängigkeiten diese Werte der Druckkräfte zu reproduzieren.

Diese Parameter können beispielsweise bei einem KNN Gewichte sein, mit denen die Eingaben, die einem Neuron oder einer anderen Verarbeitungseinheit zugeführt werden, zu einer Aktivierung dieses Neurons, bzw. dieser Verarbeitungseinheit, verrechnet werden.

Wie zuvor beschrieben, wird auf diese Weise ein qualitativer Zusammenhang zwischen Frequenzabhängigkeiten und Kenngrößen gelernt. Dieser Zusammenhang ist auch auf solche Frequenzabhängigkeiten verallgemeinerbar, die nicht Gegenstand des Trainings waren.

Der Begriff der Optimalität ist in diesem Zusammenhang immer als "optimal nach Maßgabe der Kostenfunktion" zu verstehen. Das bedeutet, dass es durch die konkrete Ausgestaltung der Kostenfunktion festlegbar ist, was genau als "optimal" anzusehen ist und welche Abweichungen von der Optimalität wie stark "bestraft" werden. Das Optimum kann beispielsweise als der Satz von Parametern des Machine Learning-Moduls definiert sein, für den die Kostenfunktion ein Minimum annimmt. Dementsprechend erhöhen Abweichungen vom Optimum den Wert der Kostenfunktion mehr oder weniger stark. Das Optimum kann beispielsweise mit einem Gradientenabstiegsverfahren nach den Parametern des Machine Learning-Moduls ermittelt werden.

Die auf die Qualität des Bauelements wirkende Kenngröße kann insbesondere beispielsweise eine Druckkraft sein, die zu dem Zeitpunkt, zu dem die Frequenzabhängigkeit der elektrischen Kenngröße am Bauelement gemessen wurde, auf das Wandlerelement wirkte und/oder vom Wandlerelement ausgeübt wurde. Die auf die Qualität des Bauelements wirkende Kenngröße kann beispielsweise auch eine aus dieser Druckkraft abgeleitete Größe sein, wie z.B. die mechanische Spannung.

In einer weiteren besonders vorteilhaften Ausgestaltung wird eine Information, ob das Wandlerelement zuvor bereits einer höheren Druckkraft ausgesetzt war, als ergänzende Kenngröße in den Lern-Datensatz aufgenommen. Das Machine Learning-Modul bildet die in jedem Lern-Datensatz enthaltene Frequenzabhängigkeit zusätzlich auf eine Aussage dahingehend ab, ob das Wandlerelement zuvor bereits einer höheren Druckkraft ausgesetzt war. Die Kostenfunktion hängt zusätzlich davon ab, inwieweit diese Aussage mit der im jeweiligen Lern-Datensatz enthaltenen ergänzenden Kenngröße übereinstimmt. Auf diese Weise kann das Machine Learning-Modul besonders gut die zuvor beschriebene Hysterese piezoelektrischer und ferroelektrischer Wandlerelemente lernen. Das Modul kann insbesondere in die Lage versetzt werden, trotz dieser Hysterese auch dann noch eine präzise Aussage hinsichtlich der Druckkraft zu machen, wenn diese Druckkraft im Fertigungsprozess des Bauelements ein Maximum angenommen hat und dann wieder abgesenkt wurde.

In einer weiteren besonders vorteilhaften Ausgestaltung wird die Frequenzabhängigkeit in Form des Resonanzverhaltens der elektrischen Kenngröße als Funktion der Frequenz ω der Wechselspannungskomponente in den Lern-Datensatz aufgenommen. Wie zuvor erläutert, ist das Resonanzverhalten besonders stark an die mechanischen Eigenschaften des Wandlerelements gebunden. Um zu einer möglichst aussagekräftigen Darstellung des Resonanzverhaltens zu gelangen, kann insbesondere beispielsweise mit einem Clustering-Algorithmus eine Auswahl aus den prinzipiell messtechnisch zur Verfügung stehenden Merkmalen getroffen werden.

Der im Rahmen des Trainingsverfahrens ermittelte Parametersatz charakterisiert das Verhalten des Machine Learning-Moduls im späteren Betrieb bei der Qualitätskontrolle. Wer über den Parametersatz verfügt, hat somit auch unmittelbar Zugriff auf das Verfahren für die Qualitätskontrolle. Daher ist auch der Parametersatz ein eigenständig verkaufbares Produkt.

Sowohl das Verfahren für die Qualitätskontrolle als auch das Trainingsverfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 für die Qualitätskontrolle;
Figur 2 Beispielhafter Aufbau zur Beschaffung der Frequenzabhängigkeit 1d für das Verfahren 100:
   Figur 3 Beispielhafter Verlauf der Druckkraft 2a auf ein Wandlerelement 2 als Funktion der Zeit t während der Fertigung eines Sensors 1;
   Figur 4 Ausführungsbeispiel des Trainingsverfahrens 200.

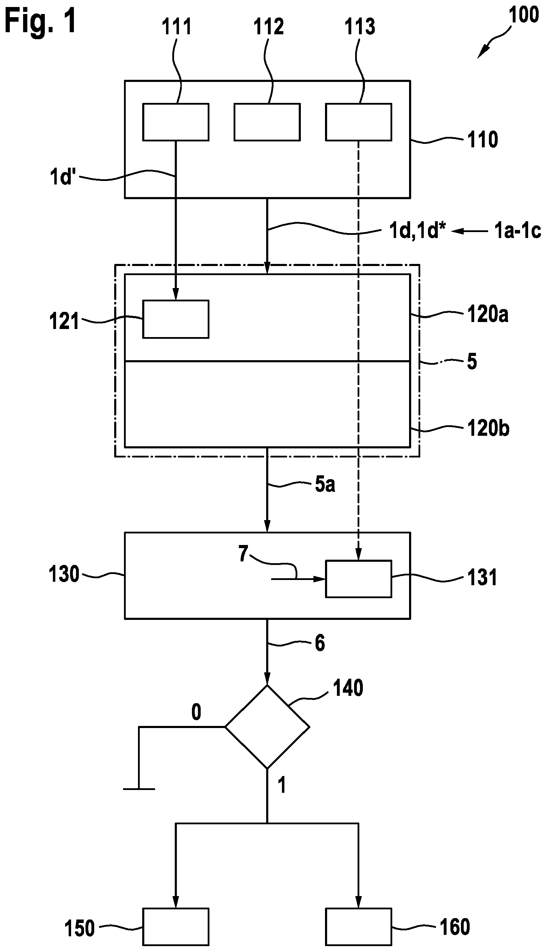

Figur 1 ist ein Ablaufdiagramm eines Ausführungsbeispiels des Verfahrens 100. In Schritt 110 wird die Frequenzabhängigkeit 1d einer durch Anlegen einer Spannung 1a mit einer Wechselspannungskomponente an das Bauelement 1 beeinflussten elektrischen Kenngröße 1b, 1c des Bauelements 1 erfasst. Die elektrische Kenngröße des Bauelements 1 kann beispielsweise einen Strom 1b, den die Spannung 1a durch das Bauelement 1 treibt, umfassen. Die elektrische Kenngröße des Bauelements 1 kann alternativ oder in Kombination hierzu beispielsweise eine aus dem Strom 1b und der Spannung 1a gebildete Impedanz 1c umfassen. Die Frequenzabhängigkeit 1d, 1d* wird in Schritt 120a dem trainierten Machine Learning-Modul 5 zugeführt, um von diesem trainierten Machine Learning-Modul 5 in Schritt 120b auf eine Bewertungsgröße 5a abgebildet zu werden. In Schritt 130 wird aus der Bewertungsgröße 5a die Qualitätsgröße 6, die ein Maß für die Qualität des Bauelements 1 ist, ausgewertet.

Dabei kann gemäß Block 111 aus der Frequenzabhängigkeit 1d, 1d* ein Maß 1d' für das Resonanzverhalten der elektrischen Kenngröße 1b, 1c als Funktion der Frequenz ω der Wechselspannungskomponente, und/oder als Funktion von Materialeigenschaften und Kontakteigenschaften des Wandlerelements 2, die ihrerseits jeweils eine Funktion der Vorspannung sind, extrahiert und gemäß Block 121 dem trainierten Machine Learning-Modul 5 zugeführt werden.

Gemäß Block 112 kann eine Frequenzabhängigkeit 1d, 1d* genutzt werden, die in einem Zustand des Bauelements 1 gemessen wurde, in dem das Wandlerelement 2 im Rahmen der Fertigung des Bauelements 1 durch Vergießen umschlossen war.

Alternativ kann gemäß Block 113 eine Frequenzabhängigkeit 1d, 1d* für einen Zustand des Bauelements 1 vor dem Vergießen genutzt werden. Die Qualitätsgröße 6 des Bauelements 1 nach dem Vergießen kann dann gemäß Block 131 mit einem Modell 7, das den Prozess des Vergießens beschreibt, aus der Bewertungsgröße 5a ausgewertet werden.

In Antwort darauf, dass die Qualitätsgröße 6 ein vorgegebenes Kriterium 140 erfüllt (Wahrheitswert 1), kann das Bauelement 1 in Schritt 150 mit einer Qualitätseinstufung gekennzeichnet werden, beispielsweise durch Aufdruck, Prägung, Gravur, Beschriftung und/oder Anbringen eines Aufklebers oder Hinterlegen hinter einer digitalen Identifikationsnummer (z.B. QR Code). Alternativ oder in Kombination hierzu kann in Schritt 160 das Bauelement 1 durch Ansteuerung mindestens einer Fördereinrichtung aus einer Fertigungslinie abgesondert werden.

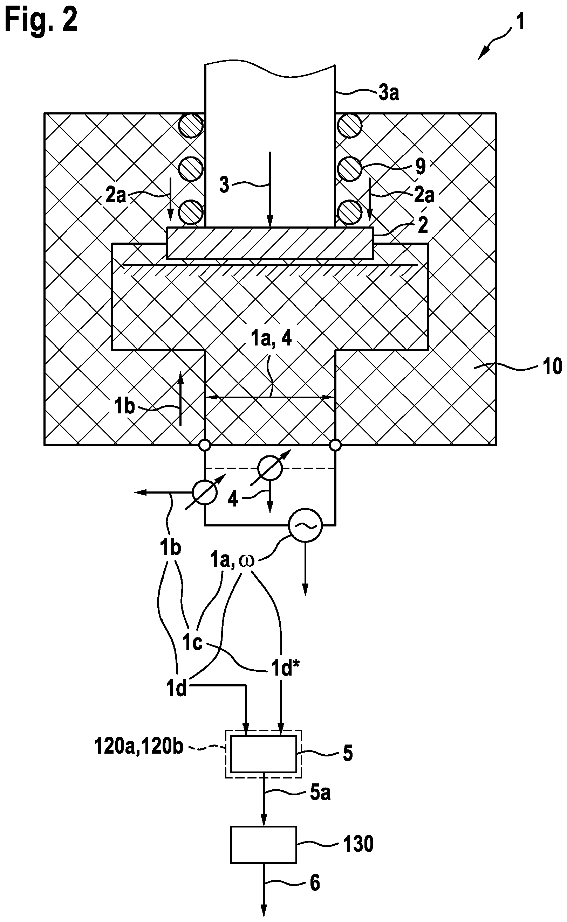

Figur 2 zeigt schematisch an einem beispielhaften Sensor als Bauelement 1, wie die Frequenzabhängigkeit 1d für die Zwecke des Verfahrens 100 erfasst werden kann. Der Sensor 1 umfasst ein piezoelektrisches oder ferroelektrisches Wandlerelement 2, das abhängig von der auf das Wandlerelement 2 ausgeübten Kraft 3 eine elektrische Spannung 4 ausgibt. Es ist vorgesehen, dass die Kraft 3 über einen Stempel 3a von außerhalb des Sensors 1 in den Sensor 1 eingeleitet wird. Beispielsweise können Druckpulse in einer in Figur 1 nicht einzeichneten Hydraulikleitung, auf die der Sensor 1 aufgeschweißt ist, die Kraft 3 auf den Stempel 3a ausüben. Zusätzlich ist das Wandlerelement 2 durch eine Vorspannfeder 9 mit einer Druckkraft 2a vorgespannt.

Im gebrauchsfertigen Zustand des Sensors 1 ist dieser beispielsweise bis auf die Fläche, die auf die Hydraulikleitung aufgeschweißt wird, mit Kunststoff 10 vergossen. Das Wandlerelement 3 und die Vorspannfeder 9 sind also keiner direkten Manipulation oder Untersuchung mehr zugänglich. Daher wird im Rahmen des Verfahrens 100 die Bewertungsgröße 5a als Maß für die Druckkraft 2a bestimmt und anschließend zur letztendlichen gesuchten Qualitätsgröße 6 ausgewertet.

Zu diesem Zweck wird an die Klemmen des Sensors 1, an denen im Betrieb des Sensors 1 die ausgegeben Spannung 4 abgegriffen wird, eine Wechselspannung 1a mit Frequenz ω angelegt. Die Wechselspannung 1a treibt einen Strom 1b durch den Sensor 1 und somit auch durch das Wandlerelement 2. Die Abhängigkeit 1d des Stroms 1b, bzw. die Abhängigkeit 1d* der Impedanz 1c, von der Frequenz ω wird dem trainierten Machine Learning-Modul 5 zugeführt, um, wie zuvor beschrieben, die Bewertungsgröße 5a (etwa eine Klassifikation und/oder Regression) zu erhalten und hieraus in Schritt 130 des Verfahrens 100 die Qualitätsgröße 6 auszuwerten.

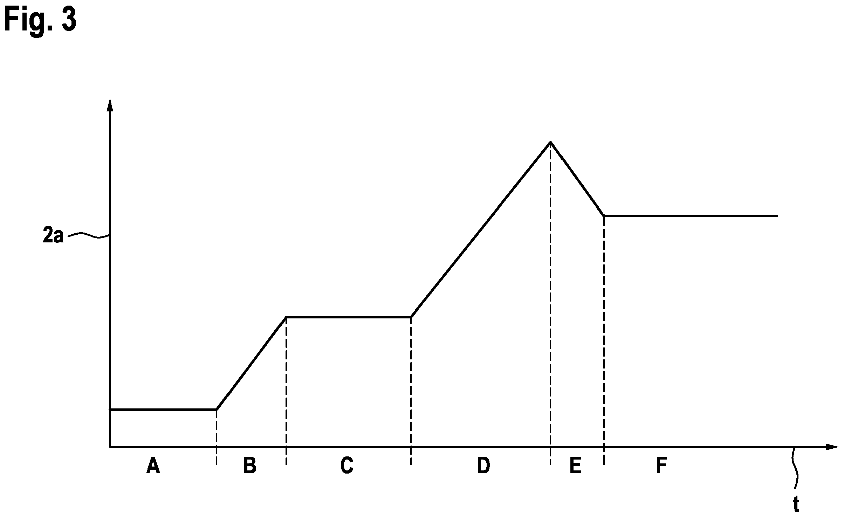

Figur 3 verdeutlicht schematisch eine beispielhafte Abhängigkeit der durch die Vorspannfeder 9 bewirkten Druckkraft 2a auf das Wandlerelement 2 als Funktion der Zeit t während des Fertigungsprozesses des Sensors 1. Der Zeitverlauf ist in sechs verschiedene Phasen A bis F unterteilt.

In Phase A zu Beginn der Fertigung ist die Druckkraft 2a konstant und sehr gering. Dies ändert sich in Phase B, wenn der Sensor 1 verschweißt wird. Die Druckkraft 2a nimmt in dieser Phase B deutlich zu, bevor sie in der Phase C nach Abschluss des Schweißens wieder konstant bleibt. In Phase D bewirkt das Ausspritzen des Sensors 1 mit heißem flüssigem Kunststoff 10, dass die Druckkraft 2a auf das Wandlerelement 2 noch einmal deutlich zunimmt. Allerdings nimmt die Druckkraft 2a dann in der Phase E wieder ab, während der Kunststoff 10 abkühlt und sich zugleich verfestigt. In der Phase F ist die Druckkraft 2a konstant auf ihrem endgültigen Wert, und der Sensor 1 ist fertiggestellt. Mit dem Verfahren 100 kann durch die Messung der Frequenzabhängigkeit 1d des Stroms 1b, bzw. die Frequenzabhängigkeit 1d* der Impedanz 1c, in diesem Zustand ein genauer Rückschluss auf die Druckkraft 2a gezogen werden.

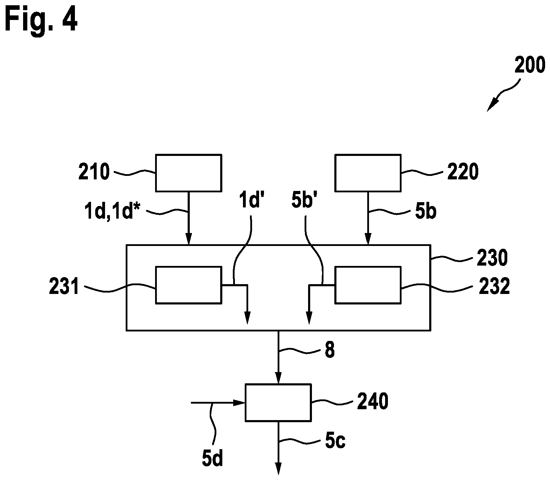

Figur 4 ist ein Ablaufdiagramm eines Ausführungsbeispiels des Trainingsverfahrens 200. In Schritt 210 wird die Frequenzabhängigkeit 1d, 1d* der elektrischen Kenngröße 1b, 1c des Bauelements 1 beschafft. In Schritt 220 wird mindestens eine auf die Qualität des Bauelements 1 wirkende Kenngröße 5b, wie beispielsweise die Druckkraft 2a, beschafft.

In Schritt 230 wird in jedem Lern-Datensatz 8 jeweils eine Frequenzabhängigkeit 1d, 1d* mit einem Wert der Kenngröße 5b verknüpft. Hierbei kann gemäß Block 231 die Frequenzabhängigkeit 1d, 1d* in Form eines Resonanzverhaltens 1d' der elektrischen Kenngröße 1b, 1c berücksichtigt werden. Gemäß Block 232 kann eine Information, ob das Wandlerelement 2 zuvor bereits einer höheren Druckkraft 2a ausgesetzt war, als ergänzende Kenngröße 5b' in den Lern-Datensatz 8 aufgenommen werden. Das Machine Learning-Modul 5 bildet dann die in jedem Lern-Datensatz 8 enthaltene Frequenzabhängigkeit 1d, 1d* zusätzlich auf eine Aussage dahingehend ab, ob das Wandlerelement 2 zuvor bereits einer höheren Druckkraft 2a ausgesetzt war. Die Kostenfunktion 5d hängt zusätzlich davon ab, inwieweit diese Aussage mit der im jeweiligen Lern-Datensatz 8 enthaltenen ergänzenden Kenngröße 5b' übereinstimmt.

Nachdem eine hinreichende Anzahl Lern-Datensätze 8 aufgestellt ist, werden in Schritt 240 die Parameter 5c, die das Verhalten des Machine Learning-Moduls 5 charakterisieren, optimiert. Ziel der Optimierung ist, dass das Machine Learning-Modul 5 die in den Lern-Datensätzen (8) enthaltenen Frequenzabhängigkeiten 1d, 1d* jeweils auf Bewertungsgrößen 5a abbildet, die nach Maßgabe einer Kostenfunktion 5d optimal mit den in den Lern-Datensätzen 8 enthaltenen Kenngrößen 5b in Einklang sind.

## Patentansprüche

1. Verfahren (100) für die Qualitätskontrolle eines Bauelements (1), wobei dieses Bauelement (1) mindestens ein Wandlerelement (2) umfasst, welches zwischen einer auf das Wandlerelement (2) oder von dem Wandlerelement (2) ausgeübten Kraft (3) einerseits und einer Änderung mindestens einer elektrischen Größe (4) des Wandlerelements (2) andererseits wandelt, wobei das Wandlerelement (2) durch ein Vorspannelement (9) druckbelastet ist, mit den Schritten:
• eine Frequenzabhängigkeit (1d, 1d*) einer durch Anlegen einer Spannung (1a) mit einer Wechselspannungskomponente an das Bauelement (1) beeinflussten elektrischen Kenngröße (1b, 1c) des Bauelements (1) wird beschafft (110);
• aus der Frequenzabhängigkeit (1d, 1d*) wird mindestens eine Bewertungsgröße (5a) ausgewertet (120b);
• aus der Bewertungsgröße (5a) wird mindestens eine gesuchte Qualitätsgröße (6), die ein Maß für die Qualität des Bauelements (1) ist, ausgewertet (130).

2. Verfahren (100) nach Anspruch 1, wobei die elektrische Kenngröße (1b, 1c) einen Strom (1b), den die Spannung (1a) durch das Bauelement (1) treibt, umfasst.

3. Verfahren (100) nach einem der Ansprüche 1 bis 2, wobei die elektrische Kenngröße (1b, 1c) eine aus
• der Spannung (1a) und
• einem von dieser Spannung (1a) durch das Bauelement (1) getriebenen Strom (1b)
gebildete Impedanz (1c) beinhaltet.

4. Verfahren (100) nach einem der Ansprüche 1 bis 3, wobei die Frequenzabhängigkeit (1d, 1d*) einem parametrisierten physikalischen Modell zugeführt (120a) und von diesem physikalischen Modell auf die Bewertungsgröße (5a) abgebildet wird (120b).

5. Verfahren (100) nach einem der Ansprüche 1 bis 4, wobei die Bewertungsgröße (5a) ein Maß für eine Druckkraft (2a), die zum Zeitpunkt der Messung der Frequenzabhängigkeit (1d, 1d*) auf das Wandlerelement (2) wirkt und/oder von dem Wandlerelement (2) ausgeübt wird, oder für eine aus der Druckkraft (2a) abgeleitete Größe ist.

6. Verfahren (100) nach einem der Ansprüche 1 bis 5, wobei mindestens eine Bewertungsgröße (5a) eine binäre Klassifikation, ob das Bauelement (1) in Ordnung ist, eine Einteilung des Bauelements in verschiedene Qualitätsstufen oder eine Klassifikation nach am Bauelement (1) vorliegenden Fehlerarten umfasst.

7. Verfahren (100) nach einem der Ansprüche 1 bis 6, wobei aus der Frequenzabhängigkeit (1d, 1d*) der elektrischen Kenngröße (1b, 1c) ein Maß (1d') für das Resonanzverhalten der elektrischen Kenngröße (1b, 1c) als Funktion der Frequenz ω der Wechselspannungskomponente, und/oder als Funktion von Materialeigenschaften und Kontakteigenschaften des Wandlerelements (2), die ihrerseits jeweils eine Funktion der Vorspannung sind, extrahiert (111) und für die Auswertung der Bewertungsgröße herangezogen wird.

8. Verfahren (100) nach einem der Ansprüche 1 bis 7, wobei eine Frequenzabhängigkeit (1d, 1d*) genutzt wird (112), die in einem Zustand des Bauelements (1) gemessen wurde, in dem das Wandlerelement (2) im Rahmen der Fertigung des Bauelements (1) durch Vergießen umschlossen war.

9. Verfahren (100) nach einem der Ansprüche 1 bis 7, wobei eine Frequenzabhängigkeit (1d, 1d*) genutzt wird (113), die in einem Zustand des Bauelements (1) gemessen wurde, in dem das Wandlerelement (2) im Rahmen der Fertigung des Bauelements (1) noch nicht durch Vergießen umschlossen war, und wobei die Qualitätsgröße (6) des Bauelements (1) nach diesem Vergießen mit einem Modell (7), das den Prozess des Vergießens beschreibt, aus der Bewertungsgröße (5a) ausgewertet wird (131).

10. Verfahren (100) nach einem der Ansprüche 1 bis 9, wobei in Antwort darauf, dass die ausgewertete Qualitätsgröße (6) ein vorgegebenes Kriterium (140) erfüllt, das Bauelement (1) mit einer Qualitätseinstufung gekennzeichnet (150), und/oder durch Ansteuerung mindestens einer auf das Bauelement (1) wirkenden Fördereinrichtung aus einer Fertigungslinie abgesondert (160), wird.

11. Verfahren (100) nach einem der Ansprüche 1 bis 10, wobei die Frequenzabhängigkeit (1d, 1d*) einem trainierten Machine Learning-Modul (5) zugeführt (120a) und von diesem Machine Learning-Modul (5) auf die Bewertungsgröße (5a) abgebildet wird (120b).

12. Verfahren (200) zum Trainieren eines Machine Learning-Moduls (5) zur Anwendung in dem Verfahren (100) nach Anspruch 11 mit den Schritten:
• eine Frequenzabhängigkeit (1d, 1d*) einer durch Anlegen einer Spannung (1a) mit einer Wechselspannungskomponente an das Bauelement (1) beeinflussten elektrischen Kenngröße (1b, 1c) des Bauelements (1) wird beschafft (210);
• mindestens eine auf die Qualität des Bauelements (1) wirkende Kenngröße (5b) wird beschafft (220);
• die Frequenzabhängigkeit (1d, 1d*) und die Kenngröße (5b) werden zu einem Lern-Datensatz (8) zusammengefasst (230);
• Parameter (5c), die das Verhalten des Machine Learning-Moduls (5) charakterisieren, werden dahingehend optimiert (240), dass das Machine Learning-Modul (5) die in den Lern-Datensätzen (8) enthaltenen Frequenzabhängigkeiten (1d, 1d*) jeweils auf Bewertungsgrößen (5a) abbildet, die die gleiche Dimension haben wie die in den Lern-Datensätzen (8) enthaltenen Kenngrößen (5b) und deren Werte nach Maßgabe einer Kostenfunktion (5d) optimal mit den Werten der in den Lern-Datensätzen (8) enthaltenen Kenngrößen (5b) übereinstimmen.

13. Verfahren (200) nach Anspruch 12, wobei eine zum Zeitpunkt der Messung der Frequenzabhängigkeit (1d, 1d*) am Bauelement (1) auf das Wandlerelement (2) wirkende, und/oder vom Wandlerelement (2) ausgeübte, Druckkraft (2a) als Kenngröße (5b) gewählt wird.

14. Verfahren (200) nach Anspruch 13, wobei
• eine Information, ob das Wandlerelement (2) zuvor bereits einer höheren Druckkraft (2a) ausgesetzt war, als ergänzende Kenngröße (5b') in den Lern-Datensatz (8) aufgenommen wird (232),
• das Machine Learning-Modul die in jedem Lern-Datensatz (8) enthaltene Frequenzabhängigkeit (1d, 1d*) zusätzlich auf eine Aussage dahingehend abbildet, ob das Wandlerelement (2) zuvor bereits einer höheren Druckkraft (2a) ausgesetzt war und
• die Kostenfunktion (5d) zusätzlich davon abhängt, inwieweit diese Aussage mit der im jeweiligen Lern-Datensatz (8) enthaltenen ergänzenden Kenngröße (5b') übereinstimmt.

15. Verfahren (200) nach einem der Ansprüche 12 bis 14, wobei die Frequenzabhängigkeit (1d, 1d*) in Form des Resonanzverhaltens (1d') als Funktion der Frequenz ω der Wechselspannungskomponente in den Lern-Datensatz (8) aufgenommen wird (231).

16. Verfahren (100, 200) nach einem der Ansprüche 11 bis 15, wobei ein neuronales Netzwerk, eine Support Vector Machine, ein Random-Forest-Modul, und/oder ein Gradient-Boosting-Modul, als Machine Learning-Modul (5) gewählt wird.

17. Parametersatz mit Parametern, die das Verhalten eines Machine Learning-Moduls (5) charakterisieren, erhalten mit dem Verfahren (200) nach einem der Ansprüche 12 bis 15 sowie optional zusätzlich Anspruch 16.

18. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 16 auszuführen.

19. Maschinenlesbarer Datenträger und/oder Downloadprodukt mit dem Parametersatz nach Anspruch 17, und/oder mit dem Computerprogramm nach Anspruch 18.

20. Computer, ausgerüstet mit dem Parametersatz nach Anspruch 17, mit dem Computerprogramm nach Anspruch 18, und/oder mit dem maschinenlesbaren Datenträger und/oder Downloadprodukt nach Anspruch 19.

## Claims

1. Method (100) for controlling the quality of a component (1), wherein this component (1) comprises at least one converter element (2) that converts between a force (3) exerted on the converter element (2) or by the converter element (2), on the one hand, and a change in at least one electrical variable (4) of the converter element (2), on the other hand, wherein the converter element (2) is subjected to pressure by a pretensioning element (9), comprising the steps of:
• a frequency dependence (1d, 1d*) of an electrical characteristic variable (1b, 1c) of the component (1) is obtained (110), which characteristic variable is influenced by applying a voltage (1a) with an AC voltage component to the component (1);
• at least one assessment variable (5a) is evaluated (120b) from the frequency dependence (1d, 1d*);
• at least one sought quality variable (6), which is a measure of the quality of the component (1), is evaluated (130) from the assessment variable (5a).

2. Method (100) according to Claim 1, wherein the electrical characteristic variable (1b, 1c) comprises a current (1b), which is driven through the component (1) by the voltage (1a).

3. Method (100) according to either of Claims 1 and 2, wherein the electrical characteristic variable (1b, 1c) includes an impedance (1c) formed from
• the voltage (1a) and
• a current (1b) driven through the component (1) by this voltage (1a).

4. Method (100) according to one of Claims 1 to 3, wherein the frequency dependence (1d, 1d*) is supplied (120a) to a parameterized physical model and is mapped (120b) onto the assessment variable (5a) by this physical model.

5. Method (100) according to one of Claims 1 to 4, wherein the assessment variable (5a) is a measure of a compressive force (2a), which is acting on the converter element (2) at the time of the measurement of the frequency dependence (1d, 1d*) and/or is exerted by the converter element (2), or of a variable derived from the compressive force (2a).

6. Method (100) according to one of Claims 1 to 5, wherein at least one assessment variable (5a) comprises a binary classification as to whether the component (1) is in working order, a categorization of the component into different quality levels or a classification according to types of faults present in the component (1) .

7. Method (100) according to one of Claims 1 to 6, wherein a measure (1d') of the resonance behaviour of the electrical characteristic variable (1b, 1c) is extracted (111) from the frequency dependence (1d, 1d*) of the electrical characteristic variable (1b, 1c) as a function of the frequency ω of the AC voltage component and/or as a function of material properties and contact properties of the converter element (2), which for their part are each a function of the pretensioning, and is used to evaluate the assessment variable.

8. Method (100) according to one of Claims 1 to 7, wherein a frequency dependence (1d, 1d*) is used (112), which was measured in a state of the component (1) in which the converter element (2) was enclosed by potting in the course of the component (1) being produced.

9. Method (100) according to one of Claims 1 to 7, wherein a frequency dependence (1d, 1d*) is used (113), which was measured in a state of the component (1) in which the converter element (2) was not yet enclosed by potting in the course of the component (1) being produced, and wherein, following this potting, the quality variable (6) of the component (1) is evaluated (131) from the assessment variable (5a) using a model (7) that describes the potting process.

10. Method (100) according to one of Claims 1 to 9, wherein, in response to the evaluated quality variable (6) meeting a predefined criterion (140), the component (1) is designated (150) with a quality classification and/or is separated (160) from a production line by the actuation of at least one conveying apparatus acting on the component (1).

11. Method (100) according to one of Claims 1 to 10, wherein the frequency dependence (1d, 1d*) is supplied (120a) to a trained machine learning module (5) and is mapped (120b) onto the assessment variable (5a) by this machine learning module (5).

12. Method (200) for training a machine learning module (5) for use in the method (100) according to Claim 11, comprising the steps of:
• a frequency dependence (1d, 1d*) of an electrical characteristic variable (1b, 1c) of the component (1) is obtained (210), which characteristic variable is influenced by applying a voltage (1a) with an AC voltage component to the component (1);
• at least one characteristic variable (5b) affecting the quality of the component (1) is obtained (220);
• the frequency dependence (1d, 1d*) and the characteristic variable (5b) are combined (230) to form a learning data record (8);
• parameters (5c) that characterize the behaviour of the machine learning module (5) are optimized (240) such that the machine learning module (5) maps the frequency dependences (1d, 1d*) contained in the learning data records (8) in each case onto assessment variables (5a) that have the same dimension as the characteristic variables (5b) contained in the learning data records (8), and the values of which, according to a cost function (5d), correspond optimally to the values of the characteristic variables (5b) contained in the learning data records (8).

13. Method (200) according to Claim 12, wherein a compressive force (2a), which is acting on the converter element (2) at the time of the measurement of the frequency dependence (1d, 1d*) at the component (1) and/or is exerted by the converter element (2), is selected as the characteristic variable (5b).

14. Method (200) according to Claim 13, wherein
• information as to whether the converter element (2) was previously already subjected to a higher compressive force (2a) is incorporated (232) into the learning data record (8) as a supplementary characteristic variable (5b'),
• the machine learning module maps the frequency dependence (1d, 1d*) contained in each learning data record (8) additionally onto a statement as to whether the converter element (2) was previously already subjected to a higher compressive force (2a), and
• the cost function (5d) additionally depends on the extent to which this statement corresponds to the supplementary characteristic variable (5b') contained in the respective learning data record (8) .

15. Method (200) according to one of Claims 12 to 14, wherein the frequency dependence (1d, 1d*) in the form of the resonance behaviour (1d') is incorporated (231) into the learning data record (8) as a function of the frequency ω of the AC voltage component.

16. Method (100, 200) according to one of Claims 11 to 15, wherein a neural network, a support vector machine, a random forest module and/or a gradient boosting module is/are selected as the machine learning module (5).

17. Parameter set comprising parameters that characterize the behaviour of a machine learning module (5), obtained using the method (200) according to one of Claims 12 to 15 and optionally additionally Claim 16.

18. Computer program, containing machine-readable instructions that, when executed on one or more computers, cause the computer(s) to carry out a method (100, 200) according to one of Claims 1 to 16.

19. Machine-readable data carrier and/or download product having the parameter set according to Claim 17 and/or having the computer program according to Claim 18.

20. Computer, equipped with the parameter set according to Claim 17, having the computer program according to Claim 18 and/or having the machine-readable data carrier and/or download product according to Claim 19.

## Revendications

1. Procédé (100) pour le contrôle qualité d'un composant (1), dans lequel ce composant (1) comprend au moins un élément convertisseur (2) qui effectue une conversion entre une force (3) exercée sur l'élément convertisseur (2) ou par l'élément convertisseur (2) d'une part et une variation d'au moins une grandeur électrique (4) de l'élément convertisseur (2) d'autre part, dans lequel l'élément convertisseur (2) est sollicité en pression par un élément de précontrainte (9), comprenant les étapes consistant à :
• obtenir (110) une dépendance en fréquence (1d, 1d*) d'une grandeur caractéristique électrique (1b, 1c) du composant (1), ladite grandeur étant influencée par l'application au composant (1) d'une tension (1a) ayant une composante de tension alternative ;
• évaluer (120b) au moins une grandeur d'évaluation (5a) à partir de la dépendance en fréquence (1d, 1d*) ;
• évaluer (130) à partir de la grandeur d'évaluation (5a) au moins une grandeur de qualité recherchée (6) qui est une mesure de la qualité du composant (1).

2. Procédé (100) selon la revendication 1, dans lequel la grandeur caractéristique électrique (1b, 1c) comprend un courant (1b) excité à travers le composant (1) par la tension (1a).

3. Procédé (100) selon l'une quelconque des revendications 1 à 2, dans lequel la grandeur caractéristique électrique (1b, 1c) comporte un élément parmi
• la tension (1a), et
• une impédance (1c) formée par le courant (1b) excité par cette tension (1a) à travers le composant (1) .

4. Procédé (100) selon l'une quelconque des revendications 1 à 3, dans lequel la dépendance en fréquence (1d, 1d*) est amenée à un modèle physique paramétré (120a) et est mappée (120b) par ce modèle physique sur la grandeur d'évaluation (5a).

5. Procédé (100) selon l'une quelconque des revendications 1 à 4, dans lequel la grandeur d'évaluation (5a) est une mesure d'une force de pression (2a) qui agit au moment de la mesure de la dépendance en fréquence (1d, 1d*) sur l'élément convertisseur (2) et/ou est exercée par l'élément convertisseur (2), ou est une mesure d'une grandeur dérivée de la force de pression (2a).

6. Procédé (100) selon l'une quelconque des revendications 1 à 5, dans lequel au moins une grandeur d'évaluation (5a) comprend une classification binaire indiquant si le composant (1) est correct, un classement du composant en différents niveaux de qualité ou une classification selon des types de défaut présents au niveau du composant (1).

7. Procédé (100) selon l'une quelconque des revendications 1 à 6, dans lequel, à partir de la dépendance en fréquence (1d, 1d*) de la grandeur caractéristique électrique (1b, 1c), une mesure (1d') du comportement à la résonance de la grandeur caractéristique électrique (1b, 1c) est extraite (111) comme une fonction de la fréquence ω de la composante de tension alternative, et/ou comme une fonction des propriétés matérielles et des propriétés de contact de l'élément convertisseur (2) qui sont à leur tour respectivement une fonction de la précontrainte, et est utilisée pour l'évaluation de la grandeur d'évaluation.

8. Procédé (100) selon l'une quelconque des revendications 1 à 7, dans lequel une dépendance en fréquence (1d, 1d*) est utilisée (112) qui a été mesurée dans un état du composant (1) dans lequel l'élément convertisseur (2) était enfermé par scellement dans le cadre de la fabrication du composant (1) .

9. Procédé (100) selon l'une quelconque des revendications 1 à 7, dans lequel une dépendance en fréquence (1d, 1d*) est utilisée (113) qui a été mesurée dans un état du composant (1) dans lequel l'élément convertisseur (2) n'était pas encore enfermé par scellement dans le cadre de la fabrication du composant (1), et dans lequel la grandeur de qualité (6) du composant (1) après ce scellement est évaluée (131) à partir de la grandeur d'évaluation (5a) par un modèle (7) qui décrit le processus de scellement.

10. Procédé (100) selon l'une quelconque des revendications 1 à 9, dans lequel, en réponse au fait que la grandeur de qualité évaluée (6) satisfait un critère prédéfini (140), le composant (1) est identifié (150) par un classement de qualité, et/ou est écarté (160) d'une chaîne de fabrication par le pilotage d'au moins un dispositif de convoyage agissant sur le composant (1).

11. Procédé (100) selon l'une quelconque des revendications 1 à 10, dans lequel la dépendance en fréquence (1d, 1d*) est amenée à un module d'apprentissage machine entraîné (5) et est mappée (120b) par ce module d'apprentissage machine (5) sur la grandeur d'évaluation (5a).

12. Procédé (200) permettant d'entraîner un module d'apprentissage machine (5) destiné à être utilisé dans le procédé (100) selon la revendication 11, comprenant les étapes consistant à :
• obtenir (210) une dépendance en fréquence (1d, 1d*) d'une grandeur caractéristique électrique (1b, 1c) du composant (1), ladite grandeur étant influencée par l'application au composant (1) d'une tension (1a) ayant une composante de tension alternative ;
• obtenir (220) au moins une grandeur caractéristique (5b) agissant sur la qualité du composant (1) ;
• regrouper (230) la dépendance en fréquence (1d, 1d*) et la grandeur caractéristique (5b) en un jeu de données d'apprentissage (8) ;
• optimiser (240) des paramètres (5c) qui caractérisent le comportement du module d'apprentissage machine (5) en ce sens que le module d'apprentissage machine (5) mappe les dépendances en fréquence (1d, 1d*) contenues dans les jeux de données d'apprentissage (8) respectivement sur des grandeurs d'évaluation (5a) qui ont la même dimension que les grandeurs caractéristiques (5b) contenues dans les jeux de données d'apprentissage (8) et dont les valeurs, conformément à une fonction de coût (5d), coïncident de façon optimale avec les valeurs des grandeurs caractéristiques (5b) contenues dans les jeux de données d'apprentissage (8).

13. Procédé (200) selon la revendication 12, dans lequel une force de pression (2a) agissant au moment de la mesure de la dépendance en fréquence (1d, 1d*) au niveau du composant (1) sur l'élément convertisseur (2) et/ou exercée par l'élément convertisseur (2) est sélectionnée comme une grandeur caractéristique (5b).

14. Procédé (200) selon la revendication 13, dans lequel
• une information indiquant si l'élément convertisseur (2) a déjà été préalablement exposé à une force de pression supérieure (2a) est enregistrée (232) dans le jeu de données d'apprentissage (8) comme une grandeur caractéristique (5b') complémentaire,
• le module d'apprentissage machine mappe la dépendance en fréquence (1d, 1d*) contenue dans chaque jeu de données d'apprentissage (8) en plus sur une déclaration spécifiant que l'élément convertisseur (2) a déjà été soumis préalablement à une force de pression supérieure (2a), et
• la fonction de coût (5d) dépend en outre du fait dans quelle mesure cette déclaration coïncide avec la grandeur caractéristique (5b') complémentaire contenue dans le jeu de données d'apprentissage (8) respectif.

15. Procédé (200) selon l'une quelconque des revendications 12 à 14, dans lequel la dépendance en fréquence (1d, 1d*) sous forme de comportement à la résonance (1d') est enregistrée (231) comme une fonction de la fréquence ω de la composante de tension alternative dans le jeu de données d'apprentissage (8).

16. Procédé (100, 200) selon l'une quelconque des revendications 11 à 15, dans lequel un réseau neuronal, une machine à vecteurs de support, un module à forêt d'arbres décisionnels et/ou un module de « gradient boosting » sont sélectionnés comme le module d'apprentissage machine (5).

17. Jeu de paramètres comprenant des paramètres qui caractérisent le comportement d'un module d'apprentissage machine (5), obtenus par le procédé (200) selon l'une quelconque des revendications 12 à 15 ainsi qu'en option en plus selon la revendication 16.

18. Programme informatique, comportant des instructions lisibles par machine qui, lorsqu'elles sont exécutées sur un ou plusieurs ordinateurs, font que le(s) ordinateur(s) exécute(nt) un procédé (100, 200) selon l'une quelconque des revendications 1 à 16.

19. Support de données lisible par machine et/ou produit de téléchargement comprenant le jeu de paramètres selon la revendication 17 et/ou le programme informatique selon la revendication 18.

20. Ordinateur, équipé d'un jeu de paramètres selon la revendication 17, d'un programme informatique selon la revendication 18, et/ou d'un support de données lisible par machine et/ou d'un produit de téléchargement selon la revendication 19.
